Europäisches Patentamt

European Patent Office

Office européen des brevets

(11) Veröffentlichungsnummer: **0 430 921 A1**

# EUROPÄISCHE PATENTANMELDUNG

(21) Anmeldenummer: 90890272.9

(22) Anmeldetag: 09.10.90

(51) Int. Cl.5: **E04B 1/61**

(30) Priorität: 20.11.89 AT 2645/89

(43) Veröffentlichungstag der Anmeldung:
05.06.91 Patentblatt 91/23

(84) Benannte Vertragsstaaten:
BE CH DE DK ES FR IT LI NL SE Patentblatt

(71) Anmelder: **Austria Metall Aktiengesellschaft**

**A-5282 Braunau am Inn(AT)**

(72) Erfinder: **Falk, Friedrich**
**Mozartstrasse 56**
**A-5282 Braunau am Inn(AT)**

(74) Vertreter: **WILHELMS, KILIAN & PARTNER**
**Patentanwälte**
**Eduard-Schmid-Strasse 2**
**W-8000 München 90(DE)**

(54) **Wand, die aus kastenförmigen Plattenelementen besteht.**

(57) Wand, die aus kastenförmigen Plattenelementen (1, 1') besteht, die entlang der Ränder V- oder U-förmige Nuten (5, 5') aufweisen, wobei beidseits mit der Oberfläche der Plattenelemente (1, 1') in an sich bekannter Weise bündig abschließenden Verbindungsleisten (6, 7), die an ihren zum Plattenelement (1, 1') weisenden Seiten Ansätze (10, 10') aufweisen, die den an den Rändern der Plattenelemente (11') angeordneten Nuten (5, 5') in der Form angepaßt sind und mit diesen Ansätzen (10, 10') in die Nuten (5, 5') formschlüssig eingreifen.

Fig. 1

# WAND, DIE AUS KASTENFÖRMIGEN PLATTENELEMENTEN BESTEHT, DIE ENTLANG DER RÄNDER V- ODER U-FÖRMIGE NUTEN AUFWEISEN.

Es sind Blechelemente bekannt, die zu Wandverkleidungen zusammengefügt werden und durch spezielle Verbindungsprofile bzw. -leisten miteinander an den Rändern zusammengeklemmt sind. Solche Systeme werden in der AT-PS 370370 und in der AT-PS 228659 beschrieben. Bei ersterer werden die Ränder abgewinkelt und eine Leiste in die abgewinkelten Ränder eingelegt und mit einer zweiten Leiste verschnappt. In der anderen Patentschrift werden die beiden Verbindungsleisten durch Verschraubungen miteinander zusammengespannt. Die beschriebenen Plattenelemente sind dünn und so ausgeführt, daß nur mit geringen Wärme- und Schalldämmwerten zu rechnen ist. Da die Platten nur Blechkonstruktionen sind, besitzen sie auch eine vergleichsweise geringe Festigkeit. Wünschenswert wäre aber, dicke Plattenelemente auf eine ähnliche Schnapp- oder Schraubmethode an den Rändern miteinander zu verbinden. Die bekannten Methoden sind dazu aber nicht verwendbar, da sie auf dünne Ränder der Plattenelemente ausgelegt sind. Weiters ist die Baudicke dieser Verbindungssystme groß und bei der Anordnung an Fassaden und dgl., werden die Leisten gleichzeitig als Tragwerk an der Fassade verwendet. Bei Verwendung solcher Verbindungen bei Fahrzeugen, dient bei den bekannten, vorhin zitierten Ausführungen, eine der beiden Leisten als Trag- bzw. Versteifungselement für die gesamte Wand.

Wünschenswert sind aber Platten, die selbst die nötige Steifigkeit, Festigkeit, Wärme- und Schalldämmeigenschaften aufweisen und ebenfalls so leicht zu verbinden sind, wie diese dünnen Plattenelemente. Eine solche Verbindung muß aber durch die wesentlich größere Festigkeit der Plattenelemente keine versteifende Funktion erfüllen. Da die Platten schon eine vergleichsweise große Wandstärke haben, muß eine solche Verbindung sehr kompakt bauen, um die benötigte Gesamtdikke der Wandkonstruktion nicht weiter zu erhöhen.

Erfindungsgemäß wird dies dadurch erreicht, daß beidseits mit der Oberfläche der Plattenelemente in an sich bekannter Weise, vorzugsweise bündig abschließende Verbindungsleisten, die an ihren, zum Plattenelement weisenden Seiten, Ansätze aufweisen, die den an den Rändern der Plattenelemente angeordneten Nuten in der Form angepaßt sind und mit diesen Ansätzen in die Nuten formschlüssig eingreifen.

Dadurch wird eine einfache Verbindung zwischen den Plattenelementen erzielt. Die Verbindung ist so gestaltet, daß sie mit der Dicke der Plattenelemente auskommt.

Es ist in weiterer Ausgestaltung der Erfindung günstig, daß die kastenförmigen Plattenelemente beidseits mit Blech verkleidet, diese Bleche an den Rändern der Plattenelemente durch Randprofile miteinander verbunden, die Blechränder U- oder V-förmig abgewinkelt und in den Profilen Vertiefungen vorgesehen sind, in denen die abgewinkelten Blechränder aufliegen.

Weiters ist es günstig, daß die vorzugsweise bündig abschließenden Verbindungsleisten beidseits zueinander stehende Stege aufweisen, die an den einander zugekehrten Flächen Verbindungsleisten zur gegenseitigen Klemmung besitzen.

Durch die Bauweise, die Randprofile aufweist, welche gleichzeitig die Verbindung für die beiden Bleche der Außenseite darstellt, ist eine sehr wirtschaftliche Bauweise möglich. Die Plattenelemente sind weiters leicht und daher bei der Montage gut zu manipulieren. Je nach Wunsch können die Blechränder U- oder V-förmig abgewinkelt sein. Dies hängt in erster Linie von der benötigten Belastbarkeit der Verbindung ab, aber auch von der gewünschten Schall- und Wärmedämmung. Denn je spitzer die Abwinkelung der Blechränder ist, desto größer ist auch die Kerbwirkung der in den Randprofilen angeordneten Nuten und je tiefer diese sind, desto größer ist die Materialschwächung in den Randprofilen und somit eine geringere Isolation an diesen Stellen. Durch die Klemmwirkung der zueinander stehenden Stege der beiden Verbindungsleisten ist eine besonders leichte und schnelle Montage möglich.

Falls eine besonders gute Wärmeisolation gewünscht wird, kann die Bauweise so ausgeführt werden, daß die die Bleche verbindenden Randprofile aus wärmeisolierendem Material bestehen und der von den Blechen und den diese verbindenden Randprofilen gebildete Hohlraum durch wärmeisolierendem Material ausgefüllt ist.

Das in den Hohlraum des Plattenelementes eingebrachte wärmeisolierende Material ist gut gegen Witterungseinflüsse geschützt, wodurch eine lange Lebensdauer der Plattenelemente gewährleistet ist.

Um eine mögliche Wärmebrücke zwischen den beiden Blechen zu vermeiden, sind die Randprofile ebenfalls aus wärmeisolierendem Material hergestellt. Durch die über sie verlaufenden Außenbleche sind die wärmeisolierten Randprofile gegen Beschädigungen während der Montage gut geschützt.

Um eine besonders gute Isolation an den Verbindungsstellen zu gewährleisten, kann eine der beiden oder beide Verbindungsleisten ebenfalls aus einem wärmeisolierenden Material hergestellt werden. Falls die Gefahr einer Beschädigung von einer Seite gegeben ist, empfiehlt es sich nämlich, die Verbindungsleiste auf dieser Seite aus einem metallischen Material herzustellen oder sie ebenfalls mit einem Blech an der Außenseite zu bewähren.

Bei praktischen Versuchen mit den beiden Verbindungsleisten hat es sich gezeigt, daß es von Vorteil ist, die Stege der aus wärmeisolierenden Materials bestehenden Verbindungsleiste kürzer auszuführen und die aus nicht wärmeisolierten Material, beispielsweise Aluminium, bestehende Verbindungsleiste mit weitaus längeren Stegen auszuführen. Dadurch wird die elastische Verformung beim Verschnappen großteils von den nicht isolierten Stegen ausgeführt. Eine Abnützung der Stege des isolierten Profils wird dadurch tunlichst vermieden.

Falls eine besonders hohe Festigkeit der Verbindungsprofile benötigt wird, ist es auch möglich, zusätzliche wellblechförmige Kunststoffkerne im Hohlraum des Plattenelementes anzuordnen.

Die Erfindung wird anhand der nachstehenden Zeichnung beschrieben. Es zeigen:

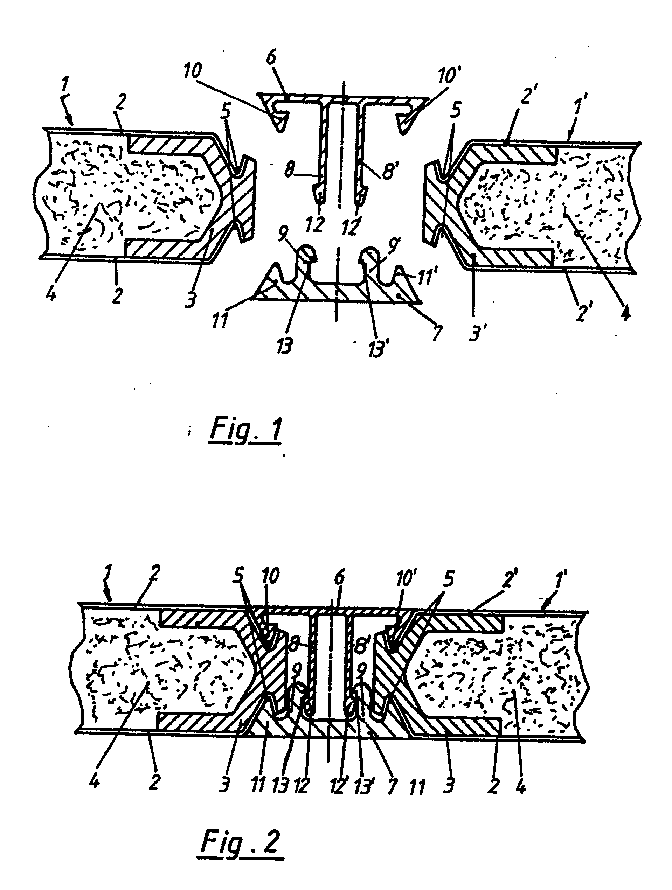

Fig. 1 die Teile einer erfindungsgemäßen Wand vor der

Montage.

Fig. 2 eine montierte Verbindung mit angrenzenden Plattenelementen.

Die Plattenelemente 1, 1′ bestehen aus den die Außenhaut bildenden Blechen 2, 2′ und dem Randprofil 3, 3′ das zwi schen den beiden Blechen 2, 2′ angeordnet ist. Zum Zwecke der Wärmeisolierung ist im Hohlraum der Plattenelemente 1, 1′ wärmeisoliertes Material 4 eingebracht. Die abgewinkelten Ränder der Bleche 2, 2′ liegen in den Nuten 5, 5′ der der Randprofile 3, 3′ auf. Die Verbindungsleisten 6 bzw. 7 haben an ihren zu den Plattenelementen 1, 1′ weisenden Ansätzen 10, 10′ bzw. 11, 11′ Nuten 5 angebracht. Mit diesen Ansätzen greifen sie im eingebauten Zustand in die Nuten 5, 5′ ein. Die Verbindungsleisten 6, 7 weisen mit den an ihnen angebrachten Stegen 8, 8′ bzw. 9, 9′ zueinander. Sie verschnappen durch die an den Stegen angeordneten Leisten 12, 12′ bzw. 13, 13′ im eingebauten Zustand.

Die Erfindung ist nicht auf die ausgeführte Zeichnung beschränkt, sondern ist diese nur beispielhaft.

**Ansprüche**

1. Wand, die aus kastenförmigen Plattenelementen besteht, die entlang der Ränder V- oder U-förmige Nuten aufweisen, dadurch gekennzeichnet, daß beidseits mit der Oberfläche der Plattenelemente (1, 1′) in an sich bekannter Weise, vorzugsweise bündig abschließenden Verbindungsleisten (6, 7), die an ihren zum Plattenelement (1, 1′) weisenden Seiten Ansätze (10) aufweisen, die den an den Rändern der Plattenelemente (1, 1′) angeordneten Nuten (5, 5′) in der Form angepaßt sind und mit diesen Ansätzen (10) in die Nuten (5, 5′) formschlüssig eingreifen.

2. Wand nach Anspruch 1, dadurch gekennzeichnet, daß die kastenförmigen Plattenelemente (1, 1′) beidseits mit Blech (2, 2′) verkleidet, diese Bleche (2, 2′) an den Rändern der Plattenelemente (1, 1′) durch Randprofile (3, 3′) miteinander verbunden, die Blechränder U- oder V-förmig abgewinkelt und in den Randprofilen (3, 3′) Vertiefungen vorgesehen sind, in denen die abgewinkelten Blechränder aufliegen.

3. Wand nach einem der vorhergehenden Ansprüche, dadurch gekennzeichnet, daß die vorzugsweise bündig abschliessenden Verbindungsleisten (6, 7) beidseits zueinander stehende Stege (8, 8′ bzw. 9, 9′) aufweisen, die an den einander zugekehrten Flächen Verbindungsleisten (6, 7) zur gegenseitigen Klemmung besitzen.

4. Wand nach Anspruch 1, dadurch gekennzeichnet, daß die die Bleche (2, 2′) verbindenden Randprofile (3, 3′) aus wärmeisolierendem Material (4) bestehen und der von den Blechen (2, 2′) und den diese verbindenden Randprofilen (3, 3′) gebildete Hohlraum durch wärme isolierendem Material (4) ausgefüllt ist.

5. Wand, nach einem der vorhergehenden Ansprüche, dadurch gekennzeichnet, daß wenigstens eine der beiden Verbindungsleisten (6, 7) aus wärmeisolierendem Material besteht.

6. Wand, nach einem der vorhergehenden Ansprüche, dadurch gekennzeichnet, daß die Stege (8, 8′ bzw. 9, 9′) des aus wärmeisolierenden Materials bestehenden, die Bleche (2, 2′) verbindenden Verbindungsleiste (6, 7) kürzer und in ihrer Wandstärke größer als die des anderen, vorzugsweise aus Metall bestehenden Verbindungsleiste (6, 7), sind.

Fig. 1

Fig. 2

**Europäisches Patentamt**

# EUROPÄISCHER RECHERCHENBERICHT

Nummer der Anmeldung

## EP 90 89 0272

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 394 443   (GUIGNON)<br>* Gesamtes Dokument *<br>– – – | 1,3,5 | E 04 B<br>1/61 |
| Y | | 2,4 | |
| Y | DE-A-2 203 761   (SCHÜLER & WITTE)<br>* Seite 9, Zeilen 8-21; Seite 15, Zeilen 1-27; Seite 19, Zeile 22 - Seite 20, Zeile 7; Figuren 1-4 *<br>– – – | 2,4 | |
| A | GB-A-2 079 358   (DEWEY)<br>* Gesamtes Dokument *<br>– – – | 6 | |
| D,A | AT-B-3 703 70   (VEREINIGTE METALLWERKE RANSHOFEN-BERNDORF AG)<br>* Seite 2, Zeile 41 - Seite 3, Zeile 4; Figur 1 *<br>– – – | 1-3 | |
| A | CH-A-1 999 90   (ARB)<br>* Seite 2, Spalte 1, Zeilen 3-20; Figuren 3,4 *<br>– – – | 3,6 | |
| D,A | AT-B-2 286 59   (ALUMINIUM-INDUSTRIE AG)<br>– – – – – | | |

| RECHERCHIERTE SACHGEBIETE (Int. Cl.5) |
|---|
| E 04 B |

Der vorliegende Recherchenbericht wurde für alle Patentansprüche erstellt

| Recherchenort | Abschlußdatum der Recherche | Prüfer |
|---|---|---|
| Den Haag | 06 Februar 91 | PORWOLL H.P. |